# EUROPÄISCHE PATENTANMELDUNG

(11) **EP 2 420 144 A1**
(43) Veröffentlichungstag der Anmeldung: **22.02.2012**
(21) Anmeldenummer: 11006832.7
(22) Anmeldetag: 19.08.2011
(51) Int. Cl.: A23C 1/00, A23C 9/00, A23L 1/39, A23L 1/40

(54) **Nahrungsmittelkonzentrat**

(30) Priorität: 20.08.2010 DE 102010035023
(71) Anmelder: Vogeley Lebensmittelwerk GmbH, 31785 Hameln (DE)
(72) Erfinder: Duhr, Antonius, 31848 Bad Münder (DE); Kleinberg, Michael, 26506 Norden (DE); Böhm, Matthias, Dr., 31787 Hameln (DE); Klöber, Melanie, 31785 Hameln (DE)
(74) Vertreter: von Seebach, Malte

(57) **Zusammenfassung**

Nahrungsmittelkonzentrat zur Herstellung von Nahrungsmittelprodukten, umfassend mindestens eine Bindemittel enthaltende erste Geschmackskomponente und mindestens eine zweite Geschmackskomponente, die getrennt voneinander vorliegen, wobei die erste Geschmackskomponente und die zweite Geschmackskomponente ohne Zugabe eines weiteren Bindemittels in ein flüssiges Medium zu geben sind und zu einem fertigen Nahrungsmittelprodukt zu verarbeiten sind.

## Beschreibung

Die vorliegende Erfindung betrifft den Bereich der Nahrungsmittelkonzentrate, insbesondere Suppen- und/oder Soßenkonzentrate.

Industriell vorgefertigten Lebensmitteln, für die sich auch der englischsprachige Begriff "convenience food" eingebürgert hat und bei denen der Hersteller bereits bestimmte Bearbeitungs- und Verarbeitungsschritte an den Lebensmitteln ausgeführt hat, kommt eine immer größere Bedeutung zu, da diese Lebensmittel für den Verbraucher bequemer und handhabbarer sind, beispielsweise Zeit und Arbeit bei Planung, Einkauf und Zubereitung von Mahlzeiten ersparen, sowie einfach vorrätig zu halten sind.

Zu den industriell vorgefertigten Lebensmitteln zählen neben den Fertiggerichten, bei denen es sich um verzehrfertige Mahlzeiten handelt, die nur noch erhitzt werden müssen, u. a. auch die Teilfertiggerichte, die zum Bereitstellen einer fertigen Mahlzeit noch der Zugabe weiterer Komponenten, wie beispielsweise Wasser bedürfen.

Als Teilfertiggerichte sind u. a. Nahrungsmittelkonzentrate zur Herstellung von Suppen, Soßen, Süßspeisen oder anderen Fixspeisen bekannt. Dazu zählen beispielsweise Instantsuppen, Instantsoßenpulver und/oder Puddingpulver. Erstere sind Mischungen aus getrockneten Zutaten, die so vorbehandelt sind, dass sie durch Vermischen mit heißem Wasser und gegebenenfalls kurzem Aufkochen eine fertige Suppe bzw. Soße ergeben. Puddingpulver wird üblicherweise unter Zugabe heißer oder kalter Flüssigkeit, wie Wasser oder Milch, und anschließendem Rühren sowie gegebenenfalls Aufkochen in fertigen Pudding überführt.

Den Teilfertiggerichten und insbesondere den Nahrungsmittelkonzentraten kommt sowohl im privaten Bereich des Verbrauchs als auch im gastronomischen Bereich und im Bereich der Großküchen eine zunehmende Bedeutung zu. Bislang sind sowohl für den privaten Bereich als auch für den Bereich der Großküchen überwiegend Nahrungsmittelkonzentrate bekannt, die ohne Variationsmöglichkeit durch Zugabe von Wasser eine fertige Speise, wie z. B. Suppe oder Soße, ergeben. Dazu zählen beispielsweise Instantsuppen oder Trockensuppen, die umgangssprachlich auch als Tütensuppen bezeichnet werden. Hauptnachteil derartiger Suppen ist die fehlende Variationsmöglichkeit in der geschmacklichen Ausrichtung der fertigen Suppen oder Soßen.

Aus EP 1 728 439 ist ein modulares Nahrungsmittelsystem bekannt, bei dem eine geschmacksneutrale Binderkomponente und mindestens eine Geschmackskomponente gesondert und verkaufsfertig vorliegen. Der Verbraucher kann durch Kombination der geschmacksneutralen Binderkomponente mit der Geschmackskomponente durch anschließende Zugabe von Flüssigkeit und gegebenenfalls Aufkochen das fertige Nahrungsmittel, eine Suppe oder Soße, herstellen. Das Nahrungsmittelsystem gemäß EP 1 728 439 kann auch eine weitere Geschmackskomponente aufweisen, die die geschmackliche Feinausrichtung des fertigen Nahrungsmittels festlegt. Gemäß EP 1 728 439 werden die Geschmackskomponenten mit der Binderkomponente vereinigt und dann durch Flüssigkeitszugabe zu einer fertigen Suppe oder Soße verarbeitet. Dabei muss der Verbraucher in Abhängigkeit der Art der gewünschten Suppe oder Soße unterschiedliche Mengen an jeweiliger Geschmackskomponente und insbesondere unterschiedliche Mengen an Binderkomponente zu geben. Der Verbraucher muss für jeden Suppentyp neu die Einwaage an Binderkomponente berechnen. Dieses Nahrungsmittelsystem erfordert zur Fertigstellung einer geschmacklich fein ausgerichteten Speise die Zusammengabe von wenigstens drei verschiedenen, separat vorzuhaltenden Komponenten, nämlich der geschmacksneutralen Binderkomponente sowie der beiden Geschmackskomponenten.

Es besteht somit im Bereich der Bereitstellung von Nahrungsmittelkonzentraten sowohl für den privaten Bereich, den gastronomischen Bereich und Einrichtungen der Gemeinschaftsverpflegung, d. h. Großküchen, das Bedürfnis nach Verbesserung der Angebotsleistung im Sinne der Verbraucher bzw. Verpflegungsnehmer und nach Verbesserung der Wirtschaftlichkeit der Angebotserstellung für den Betreiber.

Es war eine Aufgabe der vorliegenden Erfindung, ein Nahrungsmittelkonzentrat für die Herstellung von Nahrungsmitteln, insbesondere Suppen und/oder Soßen bereitzustellen, welches zugleich vielfältige geschmackliche Variationsmöglichkeiten bietet, eine einfache Herstellung der fertigen Speisen ermöglicht, geringen Lagerraum erfordert und eine gute Regenerierbarkeit auf den verschiedenen gängigen Regeneriersystemen gewährleistet.
Es war ebenso Aufgabe der vorliegenden Erfindung, ein Verfahren zur Herstellung von Nahrungsmitteln, insbesondere Suppen und/oder Soßen bereitzustellen, welches eine vereinfachte Herstellung der fertigen Speisen ermöglicht.

Diese Aufgabe wird durch den in den Ansprüchen angegebenen Gegenstand gelöst.

Das erfindungsgemäße Nahrungsmittelkonzentrat ist zur Herstellung von fertigen Nahrungsmittelprodukten vorgesehen. Es umfasst mindestens eine Bindemittel enthaltende erste Geschmackskomponente *Bᵢᵢ,* die auch als Basiskomponente bezeichnet wird, und mindestens eine zweite Geschmackskomponente *Tᵢᵢ*. Die mindestens eine erste Geschmackskomponente *Bᵢᵢ* und die mindestens eine zweite Geschmackskomponente *Tᵢᵢ* werden getrennt voneinander vorgehalten und können auch getrennt voneinander zur gemeinsamen Verwendung angeboten werden. Die mindestens eine erste Geschmackskomponente und die mindestens eine zweite Geschmackskomponente werden ohne Zugabe eines weiteren Bindemittels mit einem flüssigen Medium, wie z. B. Wasser, Milch, Sahne und/oder Saft, zu einem fertigen Nahrungsmittelprodukt verarbeitet.

Gemäß dem erfindungsgemäßen Nahrungsmittelkonzentrat brauchen zur Zubereitung einer geschmacklich fein ausgerichteten Speise lediglich zwei Komponenten kombiniert zu werden. Insbesondere ist es nicht erforderlich, eine Bindemittel enthaltende Binderkomponente separat einzuwiegen und zuzugeben.

Bindemittel im Sinne der vorliegenden Erfindung sind alle für Lebensmittel geeigneten Inhaltsstoffe, die eine bindende bzw. verdickende Wirkung im flüssigen Medium ausüben, also nach Zugabe und gegebenenfalls Aufkochen dessen Viskosität erhöhen. Als Bindemittel im Sinne der vorliegenden Erfindung kommen insbesondere Verdickungsmittel, wie Cellulose, Sahne, Eigelb, Guarkernmehl, Cellulosegummi und Xanthan, Geliermittel, wie Gelatine und Agar-Agar, Mehl, wie Weizenmehl, oder auch Stärke sowie Emulgatoren in Frage.

Die erfindungsgemäße mindestens eine erste Geschmackskomponente legt den Grundgeschmack des fertigen Nahrungsmittels fest. Bevorzugt umfasst das Nahrungsmittelkonzentrat mehrere erste Geschmackskomponenten, um Variationsmöglichkeiten des Geschmacks bereitzustellen. Die mehreren ersten Geschmackskomponenten, d.h. mindestens zwei ersten Geschmackskomponenten, können mindestens drei, mindestens vier, mindestens fünf erste Geschmackskomponenten, bevorzugt mindestens zwei, mindestens sieben oder mindestens neun erste Geschmackskomponenten sein. Die verschiedenen ersten Geschmackskomponenten liegen räumlich getrennt voneinander vor. Zur Herstellung von Suppen und Soßen können die verschiedenen ersten Geschmackskomponenten (Basiskomponenten) beispielsweise jeweils folgende Geschmacksrichtungen aufweisen:
- Tomatensoße
- Demi Glace
- Rahmsoße
- weiße Grundsoße "Gemüse"
- weiße Grundsoße "Fisch"
- weiße Grundsoße "Geflügel"
- braune Grundsoße "Geflügel"
- Käsesoße
- Tomatensoße Pomodoro Tradizionale.

Die ersten Geschmackskomponenten können untereinander kombiniert werden. Dadurch wird die geschmackliche Kombinationsmöglichkeit weiter erhöht.

Die erfindungsgemäße mindestens eine zweite Geschmackskomponente legt die geschmackliche Feinausrichtung des fertigen Nahrungsmittels fest. Bevorzugt umfasst das Nahrungsmittelkonzentrat mehrere zweite Geschmackskomponenten, um weitere Variationsmöglichkeiten der geschmacklichen Feinausrichtung bereitzustellen. Die mehreren zweiten Geschmackskomponenten, d.h. mindestens zwei zweiten Geschmackskomponenten, können mindestens drei, mindestens vier, mindestens fünf zweite Geschmackskomponenten, bevorzugt mindestens drei, mindestens neun oder mindestens zwölf zweite Geschmackskomponenten sein. Auch die verschiedenen zweiten Geschmackskomponenten liegen räumlich getrennt voneinander vor. Zur Herstellung von Suppen und Soßen können die verschiedenen zweiten Geschmackskomponenten jeweils folgende Geschmacksrichtungen aufweisen:
- Asia süß-sauer
- Asia Szechuan
- Bolognese
- Gulasch
- Hollandaise
- Kasseler
- Mediterran
- Rinderbraten
- Schweinebraten.

Auch die zweiten Geschmackskomponenten können untereinander kombiniert werden. Dadurch wird die geschmackliche Variationsmöglichkeit weiter erhöht.

Die Geschmackskomponenten enthalten Stoffe, die beim Verbraucher einen geschmacklichen Eindruck erzeugen. Dazu zählen sowohl natürliche, synthetische als auch naturidentische Stoffe. Beispielsweise zählen zu den geschmackserzeugenden Stoffen im Sinne der Erfindung: Aromen, Gewürze, Gewürzextrakte, Kräuter, Kräuterextrakte, Hefeextrakt, Gemüsepulver, Gemüseextrakt, Fruchtpulver, Fruchtextrakt, Eiweiße, Fleischextrakt, Geschmacksverstärker (wie z. B. Glutamate, Gyanylate, Ribonucleotide, Inosinate) und dergleichen.

Die mindestens eine erste und die mindestens eine zweite Geschmackskomponente können gleichzeitig oder nacheinander in das flüssige Medium gegeben werden.

Die Verarbeitung zum fertigen Nahrungsmittelprodukt erfolgt vorzugsweise durch Verrühren der Geschmackskomponenten in dem flüssigen Medium und gegebenenfalls anschließendem oder zwischenzeitlichem Aufkochen.

Als flüssiges Medium ist vorteilhafterweise Wasser, Milch, Sahne und/oder Saft zu verwenden.

Gemäß einer Ausführungsform der Erfindung liegen die mindestens eine erste und die mindestens eine zweite Geschmackskomponente in Pulverform vor. Sie können jedoch auch beispielsweise als Granulat oder in flüssiger oder pastöser Form vorliegen.

Gemäß der vorliegenden Erfindung wird ein Nahrungsmittelkonzentrat zur Herstellung von Nahrungsmitteln bereitgestellt, umfassend:
- mindestens eine Bindemittel enthaltende erste Geschmackskomponente und
- mindestens eine Bindemittel enthaltende zweite Geschmackskomponente,
die getrennt voneinander vorliegen, wobei die mindestens eine erste Geschmackskomponente und die mindestens eine zweite Geschmackskomponente ohne Zugabe eines weiteren Bindemittels in ein flüssiges Medium zu geben sind und zu einem fertigen Nahrungsmittelprodukt zu verarbeiten sind. Vorzugsweise besteht das erfindungsgemäße Nahrungsmittelkonzentrat aus den vorstehend genannten ersten und zweiten Geschmackskomponenten.

In einer Ausführungsform des erfindungsgemäßen Nahrungsmittelkonzentrats zeichnet sich das erfindungsgemäße Nahrungsmittelkonzentrat durch eine vereinfachte Zusammengabe der einzelnen Komponenten aus, d. h. durch eine einheitliche Dosierung der erfindungsgemäßen ersten und zweiten Geschmackskomponenten. Es ist somit nicht erforderlich, für die unterschiedlichen Nahrungsmittelprodukte individuell eine Berechnung der Zugabemenge der verschiedenen Geschmackskomponenten durchzuführen.

Die mindestens eine erste Geschmackskomponente des erfindungsgemäßen Nahrungsmittelkonzentrats hat gemäß dieser vorteilhaften Ausführungsform eine einheitliche Dosierung derart, dass die mindestens eine erste Geschmackskomponente mit einer ersten Einwaage pro 1 Liter flüssiges Medium einzusetzen ist, wobei die erste Einwaage unabhängig von der Anzahl eingesetzter erster Geschmackskomponenten konstant ist. Die erste Einwaage ist definiert als Summe der Einwaagen aller erster Geschmackskomponenten. Ein Liter flüssiges Medium bezieht sich auf das Volumen des flüssigen Mediums vor Zugabe der mindestens einen ersten Geschmackskomponente und der mindestens einen zweiten Geschmackskomponente. Die ersten Geschmackskomponenten sind untereinander kombinierbar. Die erste Einwaage, d. h. die Summe der Einwaagen der Basiskomponenten pro ein Liter flüssiges Medium ist unabhängig von der Anzahl eingesetzter Basiskomponenten konstant.

Die Summe der Einwaagen aller erster Geschmackskomponenten, die dann zur Herstellung des Nahrungsmittelsproduktes in ein flüssiges Medium gegeben werden, die sogenannte erste Einwaage, ist unabhängig von der Anzahl eingesetzter erster Geschmackskomponenten, die untereinander kombinierbar sind, konstant. D. h. die vorgegebene erste Einwaage wird auf die Einwaagen mehrerer erster Geschmackskomponenten aufgeteilt, wobei die Summe der Einwaagen dieser ersten Geschmackskomponenten unabhängig von der Zahl eingesetzter erster Geschmackskomponenten die vorgegebene erste Einwaage ergibt. Die einheitliche Dosierung der ersten Geschmackskomponenten besteht somit darin, dass die Summe der Einwaagen aller erster Geschmackskomponenten, die dann zur Herstellung des Nahrungsmittels in ein flüssiges Medium gegeben werden, unabhängig von der Anzahl eingesetzter erster Geschmackskomponenten konstant ist und der vorgegebenen ersten Einwaage entspricht.

So kann zum Beispiel bei einem erfindungsgemäßen Nahrungsmittelkonzentrat A, für welches eine Einwaage an erster Geschmackskomponente von 120 Gramm [g] Basiskomponente(n) pro ein Liter [1] Wasser zum Erhalt einer Soße vorgesehen ist, die erste Geschmackskomponente aus folgender Liste von Basiskomponenten gewählt werden: Tomatensoße, Demi Glace, Rahmsoße, weiße Grundsoße "Gemüse", weiße Grundsoße "Fisch", weiße Grundsoße "Geflügel" und braune Grundsoße "Geflügel", wobei die Summe der eingesetzten Basiskomponenten insgesamt 120 g pro 1 Liter flüssiges Medium, nämlich Wasser, beträgt.

Auch die mindestens eine zweite Geschmackskomponente des erfindungsgemäßen Nahrungsmittelkonzentrats hat gemäß dieser vorteilhaften Ausführungsform eine einheitliche Dosierung derart, dass die mindestens eine zweite Geschmackskomponente mit einer zweiten Einwaage pro 1 Liter flüssiges Medium einzusetzen ist, wobei die zweite Einwaage unabhängig von der Anzahl eingesetzter zweiter Geschmackskomponenten konstant ist. Die zweite Einwaage ist definiert als Summe der Einwaagen aller zweiter Geschmackskomponenten. Ein Liter flüssiges Medium bezieht sich auf das Volumen des flüssigen Mediums vor der Zugabe der mindestens einen ersten Geschmackskomponente und der mindestens einen zweiten Geschmackskomponente. Auch die zweiten Geschmackskomponenten sind untereinander kombinierbar.

Die Summe der Einwaagen aller zweiter Geschmackskomponenten, die dann zur Herstellung des Nahrungsmittelproduktes in ein flüssiges Medium gegeben werden, die sogenannte zweite Einwaage, ist unabhängig von der Anzahl eingesetzter zweiter Geschmackskomponenten, die untereinander kombinierbar sind, konstant. D. h. die vorgegebene zweite Einwaage wird auf die Einwaagen mehrerer zweiter Geschmackskomponenten aufgeteilt, wobei die Summe der Einwaagen dieser zweiten Geschmackskomponenten unabhängig von der Zahl eingesetzter zweiter Geschmackskomponenten die vorgegebene zweite Einwaage ergibt. Die einheitliche Dosierung der zweiten Geschmackskomponenten besteht somit darin, dass die Summe der Einwaagen aller zweiter Geschmackskomponenten, die dann zur Herstellung des Nahrungsmittels in ein flüssiges Medium gegeben werden, unabhängig von der Anzahl zweiter Geschmackskomponenten konstant ist und der vorgegebenen zweiten Einwaage entspricht.

So kann z. B. in dem erfindungsgemäßen Nahrungsmittelkonzentrat A, für welches eine Einwaage an zweiter Geschmackskomponente von 10 g pro 1 Liter Wasser vorgesehen ist, die zweite Geschmackskomponente aus folgender Liste von sogenannten Topnoten *T₁ᵢ* gewählt werden: Asia süß-sauer, Asia Szechuan, Bolognese, Gulasch, Hollandaise, Kasseler, Mediterran, Rinderbraten und Schweinebraten, wobei die Summe der eingesetzten Topnoten insgesamt 10 g pro 1 Liter flüssiges Medium, nämlich Wasser beträgt.

Gemäß einer anderen vorteilhaften Ausführungsform der Erfindung bezieht sich die einheitliche Dosierung der mindestens einen ersten Geschmackskomponente und der mindestens einen zweiten Geschmackskomponente nicht auf deren Einwaage pro ein Liter flüssiges Medium, sondern auf deren Volumen. Gemäß dieser bevorzugten Ausführungsform der Erfindung ist die mindestens eine erste Geschmackskomponente mit einem ersten Volumen pro ein Liter flüssiges Medium einzusetzen, wobei das erste Volumen unabhängig von der Anzahl eingesetzter erster Geschmackskomponenten konstant ist. Das erste Volumen ist definiert als Summe der Volumina aller erster Geschmackskomponenten. Ein Liter flüssiges Medium bezieht sich auf das Volumen des flüssigen Mediums vor der Zugabe der mindestens einen ersten Geschmackskomponente und der mindestens einen zweiten Geschmackskomponente. Die ersten Geschmackskomponenten sind untereinander kombinierbar. Das erste Volumen, d. h. die Summe der Volumina der Basiskomponenten ist unabhängig von der Anzahl der Basiskomponenten konstant. D.h. das vorgegebene erste Volumen wird auf die Volumina mehrerer erster Geschmackskomponenten aufgeteilt, wobei die Summe der Volumina dieser ersten Geschmackskomponenten unabhängig von der Zahl eingesetzter erster Geschmackskomponenten das vorgegebene erste Volumen ergibt. Die mehreren ersten Geschmackskomponenten, d.h. mindestens zwei ersten Geschmackskomponenten, sind gemäß bevorzugten Ausführungsformen mindestens 3, mindestens 4, mindestens 5, mindestens 6 erste Geschmackskomponenten, besonders bevorzugt 2, 7 oder 9 erste Geschmackskomponenten.

Auch die mindestens eine zweite Geschmackskomponente ist gemäß dieser vorteilhaften Ausführungsform mit einem zweiten Volumen pro ein Liter flüssiges Medium einzusetzen, wobei das zweite Volumen unabhängig von der Anzahl eingesetzter zweiter Geschmackskomponenten konstant ist. Das zweite Volumen ist definiert als Summe der Volumina aller zweiter Geschmackskomponenten. D.h. das vorgegebene zweite Volumen wird auf die Volumina mehrerer zweiter Geschmackskomponenten aufgeteilt, wobei die Summe der Volumina dieser zweiten Geschmackskomponenten unabhängig von der Zahl eingesetzter zweiter Geschmackskomponenten das vorgegebene zweite Volumen ergibt. Die mehreren zweiten Geschmackskomponenten, d.h. mindestens zwei zweiten Geschmackskomponenten, sind gemäß bevorzugten Ausführungsformen mindestens 3, mindestens 4, mindestens 5, mindestens 6 zweite Geschmackskomponenten, besonders bevorzugt 3, 9 oder 12 zweite Geschmackskomponenten. Ein Liter flüssiges Medium bezieht sich auf das Volumen des flüssigen Mediums vor der Zugabe der mindestens einen ersten Geschmackskomponente und der mindestens einen zweiten Geschmackskomponente. Die zweiten Geschmackskomponenten sind untereinander kombinierbar.

Das erfindungsgemäße Nahrungsmittelkonzentrat umfasst mehrere erste, bindemittelfreie Geschmackskomponenten und mehrere zweite Geschmackskomponenten. Das erfindungsgemäße Nahrungsmittelkonzentrat ist zur Anwendung in dem erfindungsgemäßen Herstellungsverfahren für Nahrungsmittel, insbesondere für Suppen und/oder Soßen bestimmt. Gegenstand der Anmeldung ist somit auch ein Nahrungsmittelkit, umfassend das erfindungsgemäße Nahrungsmittelkonzentrat sowie eine Gebrauchsanweisung, welche das erfindungsgemäße Herstellungsverfahren wiedergibt.

Das erfindungsgemäß Nahrungsmittelkonzentrat eignet sich sowohl zur Herstellung von Suppen als auch zur Herstellung von Soßen.

Zur Herstellung von Soßen liegt die erste Einwaage pro 1 Liter flüssiges Medium vorzugsweise im Bereich von 80 bis 180 g, besonders bevorzugt im Bereich von 100 bis 160 g.

Gemäß einer Ausführungsform des erfindungsgemäßen Nahrungsmittelkonzentrat wird die mindestens eine erste Geschmackskomponente *B₁ᵢ* zur Herstellung einer Soße mit einer ersten Einwaage pro 1 Liter flüssiges Medium im Bereich von 100 bis 140 g, bevorzugt 110 bis 130 g, besonders bevorzugt 120 g eingesetzt, wobei diese mindestens eine erste Geschmackskomponente vorzugsweise die Geschmacksrichtungen Tomatensoße, Demi Glace, Rahmsoße, weiße Grundsoße "Gemüse", weiße Grundsoße "Fisch", weiße Grundsoße "Geflügel" und/oder braune Grundsoße "Geflügel" aufweist.

Gemäß einer anderen Ausführungsform des erfindungsgemäßen Nahrungsmittelkonzentrats wird die mindestens eine erste Geschmackskomponente *B₂ᵢ* zur Herstellung einer Soße mit einer ersten Einwaage pro 1 Liter flüssiges Medium im Bereich von 130 bis 180 g, bevorzugt 140 bis 160 g, besonders bevorzugt 150 g eingesetzt, wobei diese mindestens eine erste Geschmackskomponente vorzugsweise die Geschmacksrichtungen Käsesoße und/oder Tomatensoße Pomodoro Tradizionale aufweist.

Gemäß dem erfindungsgemäßen Nahrungsmittelkonzentrat ist zur Herstellung von Suppen die Einwaage an der mindestens einen ersten Geschmackskomponente zu reduzieren und zwar in dem Verhältnis von erster Einwaage in Suppen zur ersten Einwaage in Soßen jeweils bezogen auf 1 Liter flüssiges Medium im Bereich von 3:6 bis 5:6, vorzugsweise von 2:3.

Zur Herstellung von Suppen liegt die erste Einwaage pro 1 Liter flüssiges Medium vorzugsweise im Bereich von 50 bis 120 g, besonders bevorzugt im Bereich von 65 bis 110 g.

Gemäß einer Ausführungsform des erfindungsgemäßen Nahrungsmittelkonzentrats wird die mindestens eine erste Geschmackskomponente *B₁ᵢ* zur Herstellung einer Suppe mit einer ersten Einwaage pro 1 Liter flüssiges Medium im Bereich von 60 bis 100 g, bevorzugt 70 bis 90 g, besonders bevorzugt 80 g eingesetzt, wobei diese mindestens eine erste Geschmackskomponente vorzugsweise die Geschmacksrichtungen Tomatensoße, Demi Glace, Rahmsoße, weiße Grundsoße "Gemüse", weiße Grundsoße "Fisch", weiße Grundsoße "Geflügel" und/oder braune Grundsoße "Geflügel" aufweist.

Gemäß einer anderen Ausführungsform des erfindungsgemäßen Nahrungsmittelkonzentrats wird die mindestens eine erste Geschmackskomponente B₂ᵢ zur Herstellung einer Suppe mit einer ersten Einwaage pro 1 Liter flüssiges Medium im Bereich von 75 bis 125 g, bevorzugt 90 bis 110 g pro, besonders bevorzugt 100 g eingesetzt, wobei diese mindestens eine erste Geschmackskomponente vorzugsweise die Geschmacksrichtungen Käsesoße und/oder Tomatensoße Pomodoro Tradizionale aufweist.

Gemäß dem erfindungsgemäßen Nahrungsmittelkonzentrat kann sowohl zur Zubereitung von Soßen als auch zur Zubereitung von Suppen mindestens eine zweite Geschmackskomponente zugegeben werden.

Gemäß einer weiteren Ausführungsform des erfindungsgemäßen Nahrungsmittelkonzentrats wird die mindestens eine zweite Geschmackskomponente *T₁ᵢ*, die auch als Topnote bezeichnet wird, zur Herstellung einer Soße oder Suppe mit einer zweiten Einwaage pro 1 Liter flüssiges Medium im Bereich von 8 bis 12, bevorzugt 10 g eingesetzt, wobei diese mindestens eine zweite Geschmackskomponente vorzugsweise die Geschmacksrichtungen Asia süß-sauer, Asia Szechuan, Bolognese, Gulasch, Hollandaise, Kasseler, Mediterran, Rinderbraten und/oder Schweinebraten aufweist und vorzugsweise einen oder mehrere der folgenden Inhaltsstoffe umfasst: Kräuter, Gewürze, Fruchtpulver, Gemüsepulver, Zucker, Hefeextrakt, Würze, Geschmacksverstärker, Aroma, Salz, Maltodextrin, Würzmittel, Milchzucker, Eigelbpulver, Gewürzextrakte, Säuerungsmittel, färbende Pflanzenextrakte, Verdickungsmittel, wie z. B. Xanthan.

Gemäß einer weiteren Ausführungsform des erfindungsgemäßen Nahrungsmittelkonzentrats wird die mindestens eine zweite Geschmackskomponente *T₂,* eine Topkomponente, zur Herstellung einer Suppe mit einer Einwaage pro 1 Liter flüssiges Medium im Bereich von 8 bis 12 g, bevorzugt 10 g eingesetzt, wobei diese mindestens eine zweite Geschmackskomponente vorzugsweise einen oder mehrere der folgenden Inhaltstoffe umfasst: Salz, Maltodextrin, Hefeextrakt, Aroma. Diese zweite Geschmackskomponente des Typs *T₂* wird auch als Suppenwürzer bezeichnet.

Gemäß einer weiteren Ausführungsform des erfindungsgemäßen Nahrungsmittelkonzentrats ist dieser Suppenwürzer Bindemittel frei.

Gemäß einer weiteren Ausführungsform des erfindungsgemäßen Nahrungsmittelkonzentrats wird die mindestens eine zweite Geschmackskomponente *T₃*, eine Topkomponente, zur Herstellung einer Suppe mit einer Einwaage pro 1 Liter flüssiges Medium im Bereich von 100 bis 500 g, bevorzugt im Bereich von 250 bis 350 g eingesetzt, wobei diese mindestens eine zweite Geschmackskomponente vorzugsweise einen oder mehrere der folgenden Inhaltstoffe umfasst: Fruchtzucker, Zucker, Milchzucker, Mehl (Reis, Weizen, Mais, usw.), Maltodextrin, modifizierte Stärke, native Stärke, lösliche und/oder unlösliche Ballaststoffe (z. B. Oligofruktose, Inulin, Weizenfaser), pflanzliche Fette, tierische Fette, pflanzliche Öle, tierische Öle, Molkereierzeugnisse (z. B. Süßmolkenpulver, Magermilchpulver, Käsepulver, Sahnepulver), Vitamine und Mineralstoffe, Aroma, färbende Lebensmittel, Farbstoffe, färbende Pflanzenextrakte. Diese zweite Geschmackskomponente des Typs T₃ wird auch als hochkalorische, vollbilanzierte Basis bezeichnet. Mit Hilfe dieser hochkalorischen Basis lässt sich nach einer Ausführungsform des vorliegenden Nahrungsmittelsystems eine hochkalorische und nach §14b der Diät-Verordnung vollbilanzierte Suppe herstellen.

Gemäß einer weiteren Ausführungsform des erfindungsgemäßen Nahrungsmittelkonzentrats wird die mindestens eine zweite Geschmackskomponente *T₄*, eine Topkomponente, zur Herstellung einer Suppe mit einer Einwaage pro 1 Liter flüssiges Medium im Bereich von 50 bis 400 g, bevorzugt im Bereich von 80 bis 120 g eingesetzt, wobei diese mindestens eine zweite Geschmackskomponente vorzugsweise einen oder mehrere der folgenden Inhaltsstoffe umfasst: Maltodextrin, Zucker, Milchzucker, Mehl (Reis, Weizen, Mais, usw.), modifizierte oder native Stärke, Pflanzenfett, tierische Fette pflanzliche Öle, Molkereierzeugnisse (z. B. Süßmolkenpulver, Magermilchpulver, Käsepulver, Sahnepulver), lösliche und unlösliche Ballaststoffe (z.B. Oligofruktose, Inulin, Cellulose, Weizenfaser), Vitamine und Mineralstoffe, Verdickungsmittel, Aroma, färbende Lebensmittel, Farbstoffe, färbende Pflanzenextrakte. Diese zweite Geschmackskomponente des Typs *T₄* wird auch als energie- und ballaststoffanreichernde Basis bezeichnet. Mit dieser energie- und ballaststoffanreichernde Basis lässt sich nach einer Ausführungsform des Nahrungsmittelsystems eine hochkalorische mit Ballaststoffen angereicherte Suppe herstellen.

Gemäß einer bevorzugten Ausführungsform wird zur Herstellung einer Soße mindestens eine zweite Geschmackskomponente des Typs *T₁ᵢ* verwendet.

Gemäß einer weiteren bevorzugten Ausführungsform wird zur Herstellung einer Suppe eine zweite Geschmackskomponente des Typs *T₂,* der Suppenwürzer, verwendet, sowie gemäß einer besonders bevorzugten Ausführungsform zusätzlich mindestens eine zweite Geschmackskomponente des Typs *T₁ᵢ*.

Gemäß einer weiteren bevorzugten Ausführungsform werden zur Herstellung einer hochkalorischen, vollbilanzierten Suppe zweite Geschmackskomponenten des Typs T₂, der Suppenwürzer, und des Typs *T₃*, die hochkalorische, vollbilanzierte Basis, verwendet, sowie gemäß einer besonders bevorzugten Ausführungsform zusätzlich mindestens eine zweite Geschmackskomponente des Typs *T₁ᵢ*.

Nach einer weiteren Ausführungsform werden zur Herstellung einer energie- und ballaststoffangereicherten Suppe mit der zweiten Geschmackskomponente *T₄*, der energie- und ballaststoffanreichernde Basis, zusätzlich der Suppenwürzer *T₂* verwendet und gemäß weiterhin bevorzugten Ausführungsformen zusätzlich mindestens eine Geschmackskomponente des Typs *T₁ᵢ*.

Werden zur Herstellung von Suppen zweite Geschmackskomponenten des Typs *T₁ᵢ*. und *T₂* eingesetzt, so liegt die zweite Einwaage pro 1 Liter flüssiges Medium bevorzugt im Bereich von 16 bis 24 g, besonders bevorzugt bei 20 g.

Werden zur Herstellung von Suppen zweite Geschmackskomponenten des Typs *T₂* und *T₃* eingesetzt, so liegt die zweite Einwaage pro 1 Liter flüssiges Medium bevorzugt im Bereich von 110 bis 510 g, besonders bevorzugt im Bereich von 260 bis 360 g.

Werden zur Herstellung von Suppen zweite Geschmackskomponenten des Typs *T₁ᵢ*, *T₂* und *T₃* eingesetzt, so liegt die zweite Einwaage pro 1 Liter flüssiges Medium bevorzugt im Bereich von 120 bis 520 g, besonders bevorzugt im Bereich von 270 bis 370 g.

Das erfindungsgemäße Nahrungsmittelkonzentrat kann zur Herstellung von Nahrungsmittelprodukten verwendet werden, wobei das Konzentrat in ein flüssiges Medium gegeben wird, das Gemisch anschließend gekocht (mindestens 5 Minuten) und dann wieder abgekühlt wird. Dieses Verfahren ist auch unter der Bezeichnung "Cook & Chill" bekannt. Das erfindungsgemäße Konzentrat kann auch kaltquellend eingesetzt werden oder in der klassischen Zubereitung "Cook and Serve" verwendet werden.

Bei dem Verpflegungsverfahren "Cook & Chill" werden die warmen Speisenkomponenten auf herkömmliche Weise zubereitet und gegart, dann innerhalb kurzer Zeit, etwa 90 Minuten, auf eine Temperatur von 2 bis 3 °C schockgekühlt. Durch das schnelle Abkühlen, insbesondere das rasche Durchlaufen des in hygienischer Hinsicht bedenklichen Temperaturbereichs von 10 bis 65 °C, wird die Vermehrung pathogener Keime verhindert. Bei ununterbrochener Kühlkette kann die gekühlte Speise bis zu fünf Tagen ohne Qualitätsverlust gelagert werden. Die Speise wird unmittelbar vor dem Verzehr regeneriert, d. h. auf Verzehrtemperatur erhitzt.

Bei dem Verpflegungsverfahren kaltquellend werden die Speisen ohne Erhitzen angerichtet und vor dem Verzehr auf Verzehrtemperatur erhitzt.

Gemäß einer weiteren Ausführungsform des erfindungsgemäßen Nahrungsmittelkonzentrats kann die mindestens eine erste Geschmackskomponente vorzugsweise einen oder mehrere der folgenden Inhaltsstoffe umfassen: modifizierte Stärke, Milchzucker, Molkereierzeugnisse (z. B. Süßmolkenpulver, Magermilchpulver, Käsepulver, Sahnepulver), Maltodextrin, würzende Bestandteile, Gemüsepulver, Fruchtpulver, Kartoffelerzeugnisse, Salz, Hefeextrakt, Geschmacksverstärker, Milcheiweiß, Pflanzeneiweiß, Zucker, Aroma, Säuerungsmittel, Säureregulatoren, Emulgatoren, pflanzliche Fette, tierische Fette, pflanzliche Öle, tierische Öle, Verdickungsmittel (z. B. Cellulosegummi, Xanthan), Gewürzextrakt, Malzessigextrakt, färbende Lebensmittel, Farbstoffe, färbende Pflanzenextrakte, wobei diese mindestens eine erste Geschmackskomponente vorzugsweise im Verpflegungsverfahren "kaltquellend" eingesetzt wird. Wird die mindestens eine erste Geschmackskomponente in dem Verpflegungsverfahren "Cook & Chill" eingesetzt, kann sie vorzugsweise des weiteren noch einen oder mehrere der folgenden Inhaltsstoffe umfassen: Geliermittel (z. B. Agar-Agar) und/oder Stabilisator (z. B. Diphosphat).

Vorzugsweise ist die modifizierte Stärke in jeder einzelnen Basiskomponente mit 10 bis 40 Gew.-% bezogen auf die Basiskomponente enthalten. In den für das Verpflegungsverfahren "kaltquellend" vorgesehenen Basiskomponenten ist die modifizierte Stärke in jeder einzelnen Basiskomponente vorzugsweise mit 15 bis 35 Gew.-% bezogen auf die Basiskomponente enthalten.

Vorzugsweise ist das Cellulosegummi in jeder einzelnen Basiskomponente mit 0,4 bis 1,2 Gew.-% bezogen auf die Basiskomponente enthalten. In den für das Verpflegungsverfahren "Cook & Chill" vorgesehenen Basiskomponenten ist das Cellulosegummi in jeder einzelnen Basiskomponente vorzugsweise mit 0,6 bis 1,0 Gew.-% bezogen auf die Basiskomponente enthalten.

Vorzugsweise ist das Xanthan in jeder einzelnen Basiskomponente mit 0,1 bis 0,5 Gew.-% bezogen auf die Basiskomponente enthalten. In den für das Verpflegungsverfahren "Cool & Chill" vorgesehenen Basiskomponente ist das Xanthan in jeder einzelnen Basiskomponente vorzugsweise mit 0,2 bis 0,4 Gew.-% bezogen auf die Basiskomponente enthalten.

Vorzugsweise ist das Agar-Agar in jeder einzelnen Basiskomponente mit 0,4 bis 0,6 Gew.-% bezogen auf die Basiskomponente enthalten.

Gemäß einer weiteren Ausführungsform des erfindungsgemäßen Nahrungsmittelkonzentrats zum Einsatz im Verpflegungsverfahren "kaltquellend" ist die zweite Geschmackskomponente dem flüssigen Medium hinzuzugeben (Einrühren in ca. 1/10 der benötigten Wassermenge zum Aufkochen), dieses Gemisch für 5 min. aufzukochen und durch Schockkühlen innerhalb von 90 Minuten auf 2 bis 3 °C abzukühlen, wobei die erste Geschmackskomponente vor oder nach dem Schockkühlen zugegeben wird.

Neben den bereits erwähnten Vorteilen des erfindungsgemäßen Nahrungsmittelkonzentrats zeichnen sich die mit dem vorliegenden Nahrungsmittelkonzentrat hergestellten Soßen und/oder Suppen durch hohe geschmackliche Qualität und auch hohe optische Qualität, wie z. B. kein Anbrennen und keine Hautbildung bei der Regenaration, aus, die beide über längere Standzeiten von wenigstens drei Tagen, vorzugsweise bis zu fünf Tagen erhalten bleiben.

Im Sinne der vorliegenden Erfindung können die ersten Geschmackskomponenten, die Basiskomponenten, und die zweiten Geschmackskomponenten, die Topnoten und/oder Topkomponenten, in einer gemeinsamen Umverpackung angeboten werden. Der im Sinne dieser Erfindung verwendete Begriff des Nahrungsmittelkonzentrats umfasst aber ausdrücklich auch das separate Anbieten von nicht gemeinsam umverpackten ersten und zweiten Geschmackskomponenten, sofern auf eine gemeinsame Verwendung zur Herstellung von fertigen Speisen, insbesondere Soßen und/oder Suppen durch gemeinsame Zugabe in ein flüssiges Medium und anschließender Verarbeitung zu einem fertigen Nahrungsmittelprodukt hingewiesen wird.

Ein Gegenstand der vorliegenden Erfindung betrifft die Verwendung von mindestens einer Bindemittel enthaltenden ersten Geschmackskomponente zur Herstellung von Nahrungsmittelprodukten durch Kombination mit mindestens einer zweiten Geschmackskomponente. Vorzugsweise besteht diese Kombination im Zusammengeben der mindestens einen ersten und mindestens einen zweiten Geschmackskomponente in ein flüssiges Medium zur Verarbeitung zum fertigen Nahrungsmittelprodukt.

Ein weiterer Gegenstand der vorliegenden Erfindung betrifft die Verwendung von mindestens einer zweiten Geschmackskomponente zur Herstellung von Nahrungsmittelprodukten durch Kombination mit mindestens einer Bindemittel enthaltenden ersten Geschmackskomponente. Vorzugsweise besteht diese Kombination im Zusammengeben der mindestens einen ersten und mindestens einen zweiten Geschmackskomponente in ein flüssiges Medium und Verarbeitung zum fertigen Nahrungsmittelprodukt.

Ein weiterer Gegenstand der vorliegenden Erfindung betrifft ein Verfahren zur Herstellung eines Nahrungsmittelprodukts, insbesondere von Suppen und/oder Soßen, wobei
- mindestens eine Bindemittel enthaltende erste Geschmackskomponente und
- mindestens eine, gegebenenfalls Bindemittel enthaltende, zweite Geschmackskomponente,
die getrennt voneinander vorliegen, ohne Zugabe eines weiteren Bindemittels in ein flüssiges Medium gegeben werden und zu einem fertigen Nahrungsmittelprodukt verarbeitet werden.

Gemäß dem erfindungsgemäßen Verfahren zur Herstellung von Nahrungsmitteln, insbesondere von Suppen und/oder Soßen, werden die mindestens eine Bindemittel enthaltende erste Geschmackskomponente und die mindestens eine zweite Geschmackskomponente, die getrennt voneinander vorliegen, ohne Zugabe eines weiteren Bindemittels in ein flüssiges Medium gegeben und zu der fertigen Suppe und/oder Soße verarbeitet. Dabei werden die ersten und zweiten Geschmackskomponenten in einer einheitlichen Dosierung zugegeben.

Bevorzugt besteht die einheitliche Dosierung der mindestens einen ersten Geschmackskomponente darin, dass die erste Einwaage, d.h. die Summe der Einwaagen der ersten Geschmackskomponenten unabhängig von der Anzahl eingesetzter erster Geschmackskomponenten konstant ist, d.h. dass die vorgegebene erste Einwaage auf die Einwaagen gegebenenfalls mehrerer Bindemittel enthaltender und räumlich getrennt voneinander vorliegender erster Geschmackskomponenten aufgeteilt wird, die dann ohne Zugabe eines weiteren Bindemittels in das flüssige Medium gegeben werden und zu einem fertigen Nahrungsmittelprodukt, insbesondere einer Suppe und/oder Soße verarbeitet werden, wobei die erste Einwaage unabhängig von der Anzahl eingesetzter erster Geschmackskomponenten ist.

Bevorzugt besteht die einheitliche Dosierung der mindestens einen zweiten Geschmackskomponente darin, dass die Summe der Einwaagen der zweiten Geschmackskomponenten unabhängig von der Anzahl eingesetzter zweiter Geschmackskomponenten konstant ist, d.h. dass die vorgegebene zweite Einwaage auf die Einwaagen gegebenenfalls mehrerer räumlich getrennt voneinander vorliegender zweiter Geschmackskomponenten aufgeteilt wird, die dann ohne Zugabe eines weiteren Bindemittels in das flüssiges Medium gegeben werden und zu einem fertigen Nahrungsmittelprodukt, insbesondere einer Suppe und/oder Soße verarbeitet werden, wobei die zweite Einwaage unabhängig von der Anzahl eingesetzter zweiter Geschmackskomponenten ist.

Das erfindungsgemäße Verfahren umfasst in einer bevorzugten Ausführungsform das Vorgeben einer ersten Einwaage, das Aufteilen dieser ersten Einwaage auf die Einwaagen mehrerer Bindemittel enthaltender und räumlich getrennt voneinander vorliegender erster Geschmackskomponenten, wobei die erste Einwaage unabhängig von der Anzahl eingesetzter erster Geschmackskomponenten konstant ist, das Vorgeben einer zweiten Einwaage, das Aufteilen dieser zweiten Einwaage auf die Einwaage mehrerer räumlich getrennt voneinander vorliegender zweiter Geschmackskomponenten, wobei die zweite Einwaage unabhängig von der Anzahl eingesetzter zweiter Geschmackskomponenten konstant ist, das Zugeben dieser ersten und zweiten Geschmackskomponenten ohne Zugabe eines weiteren Bindemittels in ein flüssiges Medium und Verarbeiten zu einem fertigen Nahrungsmittelprodukt, insbesondere zu Suppen und/oder Soßen.

Die ersten und zweiten Geschmackskomponenten liegen vorzugsweise in Pulverform oder Granulatform vor.

Gemäß bevorzugten Ausführungsformen werden mehrere erste Geschmackskomponenten zur Herstellung einer Suppe und/oder Soße eingesetzt, d.h. mindestens zwei erste Geschmackskomponenten, mindestens 3 erste Geschmackskomponenten, mindestens vier erste Geschmackskomponenten, mindestens fünf erste Geschmackskomponenten, mindestens sechs erste Geschmackskomponenten, mindestens 7 erste Geschmackskomponenten, mindestens 8 erste Geschmackskomponenten oder mindestens 9 erste Geschmackskomponenten, gemäß besonders bevorzugten Ausführungsformen 2, 7 oder 9 erste Geschmackskomponenten. In allen Fällen liegen die verschiedenen ersten Geschmackskomponenten räumlich getrennt voneinander vor.

Gemäß bevorzugten Ausführungsformen werden mehrere zweite Geschmackskomponenten zur Herstellung einer Suppe und/oder Soße eingesetzt, d.h. mindestens zwei zweite Geschmackskomponenten, mindestens 3 zweite Geschmackskomponenten, mindestens vier zweite Geschmackskomponenten, mindestens fünf zweite Geschmackskomponenten, mindestens sechs zweite Geschmackskomponenten, mindestens 7 zweite Geschmackskomponenten, mindestens 8 zweite Geschmackskomponenten oder mindestens 9 zweite Geschmackskomponenten, gemäß besonders bevorzugten Ausführungsformen 3, 9 oder 12 zweite Geschmackskomponenten. In allen Fällen liegen die verschiedenen zweiten Geschmackskomponenten räumlich getrennt voneinander vor.

Zusammenfassend beinhaltet die vorliegende Erfindung folgende Aspekte:
1. Nahrungsmittelkonzentrat zur Herstellung von Nahrungsmittelprodukten, umfassend
   - mindestens eine Bindemittel enthaltende erste Geschmackskomponente und
   - mindestens eine zweite Geschmackskomponente,
   die getrennt voneinander vorliegen, wobei die erste Geschmackskomponente und die zweite Geschmackskomponente ohne Zugabe eines weiteren Bindemittels durch Geben in ein flüssiges Medium zu einem fertigen Nahrungsmittelprodukt verarbeitbar sind.
2. Nahrungsmittelkonzentrat gemäß Aspekt 1, wobei die mindestens eine zweite Geschmackskomponente Bindemittel enthält.
3. Nahrungsmittelkonzentrat gemäß Aspekt 1 oder 2, derart hergerichtet, dass die mindestens eine erste Geschmackskomponente mit einer ersten Einwaage [Gramm] pro Liter flüssiges Medium zuzugeben ist, wobei die erste Einwaage unabhängig von der Anzahl eingesetzter erster Geschmackskomponenten konstant ist.
4. Nahrungsmittelkonzentrat gemäß einem der Aspekte 1 bis 3, wobei die ersten Geschmackkomponenten folgende Geschmacksrichtungen aufweisen: Tomatensoße, Demi Glace, Rahmsoße, weiße Grundsoße "Gemüse", weiße Grundsoße "Fisch", weiße Grundsoße "Geflügel", braune Grundsoße "Geflügel", Käsesoße oder Tomatensoße Pomodoro Tradizionale.
5. Nahrungsmittelkonzentrat gemäß einem der Aspekte 1 bis 4, wobei zur Herstellung einer Soße die erste Einwaage pro 1 Liter flüssiges Medium im Bereich von 80 bis 180 Gramm, bevorzugt im Bereich von 100 bis 160 Gramm liegt.
6. Nahrungsmittelkonzentrat gemäß Aspekt 5, wobei die mindestens eine erste Geschmackskomponente *(B₁ᵢ)* zur Herstellung einer Soße mit einer ersten Einwaage pro 1 Liter flüssiges Medium im Bereich von 100 bis 140 g, bevorzugt 110 bis 130 g, besonders bevorzugt 120 g einzusetzen ist, wobei *B₁ᵢ* aus Tomatensoße, Demi Glace, Rahmsoße, weißer Grundsoße "Gemüse", weißer Grundsoße "Fisch", weißer Grundsoße "Geflügel" und brauner Grundsoße "Geflügel" ausgewählt ist.
7. Nahrungsmittelkonzentrat gemäß Aspekt 5, wobei die mindestens eine erste Geschmackskomponente *(B₂ᵢ)* zur Herstellung einer Soße mit einer ersten Einwaage pro 1 Liter flüssiges Medium im Bereich von 130 bis 180 g, bevorzugt 140 bis 160 g, besonders bevorzugt 150 g einzusetzen ist, wobei *B₂ᵢ* aus Käsesoße und Tomatensoße Pomodoro Tradizionale ausgewählt ist.
8. Nahrungsmittelkonzentrat gemäß einem der Aspekte 1 bis 4, wobei zur Herstellung einer Suppe die erste Einwaage pro 1 Liter flüssiges Medium im Bereich von 50 bis 120 g, bevorzugt im Bereich von 65 bis 110 g liegt.
9. Nahrungsmittelkonzentrat gemäß Aspekt 8, wobei die mindestens eine erste Geschmackskomponente *(B₁ᵢ)* zur Herstellung einer Suppe mit einer ersten Einwaage pro 1 Liter flüssiges Medium im Bereich von 60 bis 100 g, bevorzugt 70 bis 90 g, besonders bevorzugt 80 g einzusetzen ist, wobei *B₁ᵢ* aus Tomatensoße, Demi Glace, Rahmsoße, weißer Grundsoße "Gemüse", weißer Grundsoße "Fisch", weißer Grundsoße "Geflügel" und brauner Grundsoße "Geflügel" ausgewählt ist.
10. Nahrungsmittelkonzentrat gemäß Aspekt 8, wobei die mindestens eine erste Geschmackskomponente *(B₂ᵢ)* zur Herstellung einer Suppe mit einer ersten Einwaage pro 1 Liter flüssiges Medium im Bereich von 75 bis 125 g, bevorzugt 90 bis 110 g, besonders bevorzugt 100 g einzusetzen ist, wobei *B₂ᵢ* aus Käsesoße und Tomatensoße Pomodoro Tradizionale ausgewählt ist.
11. Nahrungsmittelkonzentrat gemäß einem der Aspekte 1 bis 10, wobei die mindestens eine erste Geschmackskomponente einen oder mehrere der folgenden Inhaltsstoffe umfasst: modifizierte Stärke, Milchzucker, Molkereierzeugnisse (z. B. Süßmolkenpulver, Magermilchpulver, Käsepulver, Sahnepulver), Maltodextrin, würzende Bestandteile, Gemüsepulver, Fruchtpulver, Kartoffelerzeugnisse, Salz, Hefeextrakt, Geschmacksverstärker, Milcheiweiß, Pflanzeneiweiß, Zucker, Aroma, Säuerungsmittel, Säureregulatoren, Emulgatoren, pflanzliche Fette, tierische Fette, pflanzliche Öle, tierische Öle, Verdickungsmittel (z. B. Cellulosegummi, Xanthan), Gewürzextrakt, Malzessigextrakt, färbende Lebensmittel, Farbstoffe und/oder färbende Pflanzenextrakte.
12. Nahrungsmittelkonzentrat gemäß Aspekt 11, wobei die mindestens eine erste Geschmackskomponente des weiteren einen oder mehrere der folgenden Inhaltsstoffe umfasst: Geliermittel (z. B. Agar-Agar) und/oder Stabilisator (z. B. Diphosphat).
13. Nahrungsmittelkonzentrat gemäß einem der Aspekte 1 bis 12, derart hergerichtet, dass die mindestens eine zweite Geschmackskomponente mit einer zweiten Einwaage [Gramm] pro Liter flüssiges Medium zuzugeben ist, wobei die zweite Einwaage unabhängig von der Anzahl eingesetzter zweiter Geschmackskomponenten konstant ist.
14. Nahrungsmittelkonzentrat gemäß einem der Aspekte 1 bis 13, wobei die zweiten Geschmackskomponenten *(T₁ᵢ)* folgende Geschmacksrichtungen aufweisen: Asia süß-sauer, Asia Szechuan, Bolognese, Gulasch, Hollandaise, Kasseler, Mediterran, Rinderbraten oder Schweinebraten.
15. Nahrungsmittelkonzentrat gemäß einem der Aspekte 1 bis 14, wobei die mindestens eine zweite Geschmackskomponente *(T₁ᵢ)* zur Herstellung einer Soße oder Suppe mit einer zweiten Einwaage pro 1 Liter flüssiges Medium im Bereich von 8 bis 12 g, bevorzugt 10 g einzusetzen ist, wobei *T₁ᵢ* vorzugsweise einen oder mehrere der folgenden Inhaltsstoffe umfasst: Kräuter, Gewürze, Fruchtpulver, Gemüsepulver, Zucker, Hefeextrakt, Würze, Geschmacksverstärker, Aroma, Salz, Maltodextrin, Würzmittel, Milchzucker, Eigelbpulver, Gewürzextrakte, Säuerungsmittel, färbende Pflanzenextrakte, Verdickungsmittel (z. B. Xanthan).
16. Nahrungsmittelkonzentrat gemäß einem der Aspekte 1 bis 13, wobei die mindestens eine zweite Geschmackskomponente *(T₂)*, der Suppenwürzer, zur Herstellung einer Suppe mit einer Einwaage pro 1 Liter flüssiges Medium im Bereich von 8 bis 12 g, bevorzugt 10 g einzusetzen ist, wobei *T₂* vorzugsweise einen oder mehrere der folgenden Inhaltsstoffe umfasst: Salz, Maltodextrin, Hefeextrakt, Würze, Geschmacksverstärker, Aroma.
17. Nahrungsmittelkonzentrat gemäß einem der Aspekte 1 bis 13, wobei die mindestens eine zweite Geschmackskomponente *(T₃),* die hochkalorische Basis, zur Herstellung einer Suppe mit einer Einwaage pro 1 Liter flüssiges Medium im Bereich von 100 bis 500 g, bevorzugt im Bereich von 250 bis 350 g einzusetzen ist, wobei T₃ vorzugsweise einen oder mehrere der folgenden Inhaltsstoffe umfasst: Fruchtzucker, Zucker, Milchzucker, Mehl (Reis, Weizen, Mais, usw.), Maltodextrin, modifizierte Stärke, native Stärke, lösliche und/oder unlösliche Ballaststoffe (z. B. Oligofruktose, Inulin, Weizenfaser), pflanzliche Fette, tierische Fette, pflanzliche Öle, tierische Öle, Molkereierzeugnisse (z. B. Süßmolkenpulver, Magermilchpulver, Käsepulver, Sahnepulver), Vitamine und Mineralstoffe, Aroma, färbende Lebensmittel, Farbstoffe, färbende Pflanzenextrakte.
18. Nahrungsmittelkonzentrat gemäß einem der Aspekte 1 bis 13, wobei die mindestens eine zweite Geschmackskomponente *(T₄)*, die energie- und ballaststoffanreichernde Basis, zur Herstellung einer Suppe mit einer Einwaage pro 1 Liter flüssiges Medium im Bereich von 50 bis 400 g , bevorzugt im Bereich von 80 bis 120g einzusetzen ist, wobei *T₄* vorzugsweise einen oder mehrere der folgenden Inhaltsstoffe aufweist: Maltodextrin, Zucker, Milchzucker, Mehl, modifizierte oder native Stärke, Pflanzenfett, tierische Fette pflanzliche Öle, Molkereierzeugnisse, lösliche und unlösliche Ballaststoffe, Vitamine und Mineralstoffe, Verdickungsmittel, Aroma, färbende Lebensmittel, Farbstoffe, färbende Pflanzenextrakte.
19. Verwendung mindestens einer Bindemittel enthaltenden ersten Geschmackskomponente zur Herstellung von Nahrungsmittelprodukten durch Zusammengeben der mindestens einen Bindemittel enthaltenden ersten Geschmackskomponente und mindestens einer zweiten Geschmackskomponente in ein flüssiges Medium und Verarbeitung zum fertigen Nahrungsmittelprodukt.
20. Verwendung mindestens einer zweiten Geschmackskomponente zur Herstellung von Nahrungsmittelprodukten durch Zusammengeben der mindestens einen zweiten Geschmackskomponente mit mindestens einer Bindemittel enthaltenden ersten Geschmackskomponente in ein flüssiges Medium und Verarbeitung zum fertigen Nahrungsmittelprodukt.
21. Verwendung gemäß einem der Aspekte 19 oder 20, wobei die mindestens eine zweite Geschmackskomponente Bindemittel enthält.
22. Verfahren zur Herstellung eines Nahrungsmittelproduktes, dadurch gekennzeichnet, dass mindestens eine Bindemittel enthaltende erste Geschmackskomponente und mindestens eine, gegebenenfalls Bindemittel enthaltende, zweite Geschmackskomponente, die getrennt voneinander vorliegen, ohne Zugabe eines weiteren Bindemittels in ein flüssiges Medium gegeben werden und zu dem fertigen Nahrungsmittelprodukt verarbeitet werden.
23. Verfahren gemäß Aspekt 22, dadurch gekennzeichnet, dass mehrere Bindemittel enthaltende erste Geschmackskomponenten, die getrennt voneinander vorliegen, in das flüssige Medium gegeben werden.
24. Verfahren gemäß Aspekt 22 oder 23, dadurch gekennzeichnet, dass eine erste Einwaage vorgegeben wird, diese erste Einwaage auf die Einwaagen mehrerer Bindemittel enthaltender und räumlich getrennt voneinander vorliegender erster Geschmackskomponenten aufgeteilt wird, eine zweite Einwaage vorgegeben wird, diese zweite Einwaage auf die Einwaagen mindestens einer zweiten Geschmackskomponente aufgeteilt wird, diese eingesetzten ersten zweiten Geschmackskomponenten ohne Zugabe eines weiteren Bindemittels in ein flüssiges Medium gegeben werden und zu einem fertigen Nahrungsmittel, insbesondere einer Suppe und/oder Soße verarbeitet werden.

Die vorliegende Erfindung wird anhand der folgenden typischen Zubereitungsanweisung für das erfindungsgemäße Nahrungsmittelkonzentrat erläutert.

### Beispiel 1: Zubereitungsanweisung (die in kursiver Schrift angegebenen Bezeichnungen dienen lediglich der Erläuterung der Erfindung)

| **Basiskomponenten Cook&Chill** | | | **Topnoten** | | | **Basiskomponenten kaltquellend** | | |
|---|---|---|---|---|---|---|---|---|
| | | | | | | | | |
| **Zubereitung für Soße: 120 g/l** | | | **1:100 = 10 g/l** | | | **Zubereitung für Soße: 120 g/l** | | |
| *B₁₁* | Tomatensoße 12 kg | | *T₁₁* | Asia, süß-sauer 1 kg | | *B₁₁* | Tomatensoße 12 kg | |
| *B₁₂* | Demi Glace 12 kg | | *T₁₂* | Asia, Szechuan 1 kg | | *B₁₂* | Demi Glace 12 kg | |
| *B₁₃* | Rahmsoße 12 kg | | *T₁₃* | Bolognese 1 kg | | *B₁₃* | Rahmsoße 12 kg | |
| *B₁₄* | Weiße Grundsoße "Gemüse" 12 kg | | *T₁₄* | Gulasch 1 kg | | *B₁₄* | Weiße Grundsoße "Gemüse" 12 kg | |
| *B₁₅* | Weiße Grundsoße "Fisch" 12 kg | | *T₁₅* | Hollandaise 1 kg | | *B₁₅* | Weiße Grundsoße "Fisch" 12 kg | |
| *B₁₆* | Weiße Grundsoße "Geflügel" 12 kg | | *T₁₆* | Kasseler 1 kg | | *B₁₆* | Weiße Grundsoße "Geflügel" 12 kg | |
| *B₁₇* | Braune Grundsoße "Geflügel" 12 kg | | *T₁₇* | Mediterran 1 kg | | *B₁₇* | Braune Grundsoße "Geflügel" 12 kg | |
| | | | *T₁₈* | Rinderbraten 1 kg | | | | |
| | | | *T₁₉* | Schweinebraten 1 kg | | | | |
| **Zubereitung für Soße: 150 g/l** | | | | | | **Zubereitung für Soße: 150 g/l** | | |
| *B₂₁* | Käsesoße 12 kg | | | | | *B₂₁* | Käsesoße 13,5 kg | |
| *B₂₂* | Tomatensoße Pomodoro Tradizionale 15 kg | | | | | *B₂₂* | Tomatensoße Pomodoro Tradizionale 15 kg | |
| | | | **Topkomponenten** | | | | | |
| **Zubereitung als Suppe: 80 g/l** | | | *T₂* | **Suppenwürzer: 10 g/l** | | **Zubereitung als Suppe: 80 g/l** | | |
| *B*_{*11*- *17*} | alle außer Käsesoße und Tomatensoße Pomodoro Tradizionale | | *T₃* | **hochkalorische, vollbilanzierte Basis: 250-350 g/l** | | *B₁₁₋₁₇* | alle außer Käsesoße und Tomatensoße Pomodoro Tradizionale | |
| | | | *T₄* | **energie- und ballaststoffanreichernde Basis 80-120 g/l** | | | | |
| **Zubereitung als Suppe 100 g/l** | | | | | | **Zubereitung als Suppe 100 g/l** | | |
| *B_{21- 22}* | Käsesoße und Tomatensoße Pomodoro Tradizionale | | | | | *B*_{*21*-*22*} | Käsesoße und Tomatensoße Pomodoro Tradizionale | |

Gemäß dieser Zubereitungsanweisung können die ersten Geschmackskomponenten *B₁ᵢ* = *B₁₁* bis *B₁₇* untereinander kombiniert werden, wobei zur Herstellung einer Soße die Summe der Einwaagen aller Komponenten *B₁ᵢ* 120 g, bezogen auf ein Liter flüssiges Medium, beträgt und zur Herstellung einer Suppe die Summe der Einwaagen aller Komponenten *B₁ᵢ* 80 g, bezogen auf ein Liter flüssiges Medium, beträgt.

Auch die ersten Geschmackskomponenten *B₂ᵢ* = *B₂₁* und *B₂₂* können untereinander kombiniert werden, wobei zur Herstellung einer Soße die Summe der Einwaagen der Komponenten *B₂ᵢ* 150 g, bezogen auf ein Liter flüssiges Medium, beträgt und zur Herstellung einer Suppe die Summe der Einwaagen aller Komponenten *B₂ᵢ* 100 g, bezogen auf ein Liter flüssiges Medium, beträgt.

Auch die zweiten Geschmackskomponenten *T₁ᵢ* = *T₁₁,* bis *T₁₉* können untereinander kombiniert werden, wobei zur Herstellung einer Soße oder Suppe die Summe der Einwaagen aller Komponenten *T₁ᵢ* 10 g bezogen auf ein Liter flüssiges Medium beträgt. Zur Herstellung einer Suppe wird vorzugsweise zusätzlich der Suppenwürzer *T₂* mit einer Einwaage von 10 g pro Liter flüssiges Medium zugegeben. Zur Herstellung einer hochkalorischen, vollbilanzierten Suppe wird des weiteren zusätzlich die hochkalorische Basis *T₃* mit einer Einwaage von 250 bis 350 g pro 1 Liter flüssiges Medium zugegeben. Zur Herstellung einer energie- und ballaststoffangereicherten Suppe wird die Topkomponente *T₄* mit einer Einwaage von 80 bis 120 g pro 1 Liter flüssiges Medium zugegeben.

In den folgenden Beispielen 2-9 ist die Einwaage an Basiskomponente(n), Topnote(n) und Topkomponente(n), jeweils bezogen auf ein Liter flüssiges Medium (wobei sich das Volumen des Mediums auf den Zustand vor Zugabe der Geschmackskomponenten bezieht), angegeben.

### Beispiel 2: Soße für Bolognese

| **Komponente** | | **Einwaage [Gramm]/ pro 1 Liter Wasser** |
|---|---|---|
| **Basiskomponente(n)** | | |
| *B₁₁* | Tomatensoße | 120 |
| | | |

| **Topnote(n)** | | |
|---|---|---|
| *T₁₃* | Bolognese | 10 |

### Beispiel 3: Soße für Chili con Carne

| **Komponente** | | **Einwaage [Gramm]/ pro 1 Liter Wasser** |
|---|---|---|
| **Basiskomponente(n)** | | |
| *B₁₁* | Tomatensoße | 80 |
| *B₁₂* | Demi Glace | 40 |
| | | |

| **Topnote(n)** | | |
|---|---|---|
| *T₁₃* | Bolognese | 7 |
| *T₁₄* | Gulasch | 2 |
| *T₁₈* | Rinderbraten | 1 |

### Beispiel 4: Tomatensuppe Pomodoro Tradizionale

| **Komponente** | | **Einwaage [Gramm]/ pro 1 Liter Wasser** |
|---|---|---|
| **Basiskomponente(n)** | | |
| *B₂₂* | Tomatensoße Pomodoro Tradizionale | 100 |
| | | |

| **Topkomponente(n)** | | |
|---|---|---|
| *T₂* | Suppenwürzer | 10 |

### Beispiel 5: Tomatensuppe mediterran

| **Komponente** | | **Einwaage [Gramm]/ pro 1 Liter Wasser** |
|---|---|---|
| **Basiskomponente(n)** | | |
| *B₁₁* | Tomatensoße | 80 |
| | | |

| **Topnote(n)** | | |
|---|---|---|
| *T₁₇* | Mediterran | 10 |
| | | |

| **Topkomponente(n)** | | |
|---|---|---|
| *T₂* | Suppenwürzer | 10 |

### Beispiel 6: Tomatensuppe

| **Komponente** | | **Einwaage [Gramm]/ pro 1 Liter Wasser** |
|---|---|---|
| **Basiskomponente(n)** | | |
| *B₁₁* | Tomatensoße | 80 |
| | | |
| **Topkomponente(n)** | | |
| *T₂* | Suppenwürzer | 10 |

### Beispiel 7: Basis für Hackfleischsuppe

| **Komponente** | | **Einwaage [Gramm]/ pro 1 Liter Wasser** |
|---|---|---|
| **Basiskomponente(n)** | | |
| *B₁₁* | Tomatensoße | 53 |
| *B*_{*1*2} | Demi Glace | 27 |
| | | |

| **Topnote(n)** | | |
|---|---|---|
| *T₁₃* | Bolognese | 7 |
| *T₁₄* | Gulasch | 2 |
| *T₁₈* | Rinderbraten | 1 |
| | | |

| **Topkomponente(n)** | | |
|---|---|---|
| *T₂* | Suppenwürzer | 10 |

### Beispiel 8 : Käsesuppe

| **Komponente** | | **Einwaage [Gramm]/ pro 1 Liter Wasser** |
|---|---|---|
| **Basiskomponente(n)** | | |
| *B₂₁* | Käsesoße | 100 |
| | | |

| **Topkomponente(n)** | | |
|---|---|---|
| *T₂* | Suppenwürzer | 10 |

### Beispiel 9: helle Soße für Gemüse

| **Komponente** | | **Einwaage [Gramm]/ pro 1 Liter Wasser** |
|---|---|---|
| **Basiskomponente(n)** | | |
| *B₁₂* | Demi Glace | 18 |
| *B₁₃* | Rahmsoße | 12 |
| *B₁₄* | Weiße Grundsoße "Gemüse" | 90 |
| | | |

| **Topnote(n)** | | |
|---|---|---|
| *T₁₅* | Hollandaise | 9 |
| *T₁₇* | Mediterran | 1 |

### Beispiel 10: hochkalorische, vollbilanzierte Tomatensuppe

| **Komponente** | | **Einwaage [Gramm]/ pro 1 Liter Wasser** |
|---|---|---|
| **Basiskomponente(n)** | | |
| *B₁₁* | Tomatensoße | 80 |
| | | |

| **Topkomponente(n)** | | |
|---|---|---|
| *T₂* | Suppenwürzer | 10 |
| *T₃* | hochkalorische, vollbilanzierte Basis | 300 |

### Beispiel 11 : Cremesuppe

| **Komponente** | | **Einwaage [Gramm]/ pro 1 Liter Wasser** |
|---|---|---|
| **Basiskomponente(n)** | | |
| *B₁₂* | Demi Glace | 12 |
| *B₁₃* | Rahmsoße | 8 |
| *B₁₄* | Weiße Grundsoße "Gemüse" | 60 |
| | | |

| **Topnote(n)** | | |
|---|---|---|
| *T₁₅* | Hollandaise | 9 |
| *T₁₇* | Mediterran | 1 |
| | | |

| **Topkomponente(n)** | | |
|---|---|---|
| *T₂* | Suppenwürzer | 10 |

### Beispiel 12 : hochkalorische, vollbilanzierte Cremesuppe

| **Komponente** | | **Einwaage [Gramm]/ pro 1 Liter Wasse**r |
|---|---|---|
| **Basiskomponente(n)** | | |
| *B₁₂* | Demi Glace | 12 |
| *B₁₃* | Rahmsoße | 8 |
| *B₁₄* | Weiße Grundsoße "Gemüse" | 60 |
| | | |

| **Topnote(n)** | | |
|---|---|---|
| *T₁₅* | Hollandaise | 9 |
| *T₁₇* | Mediterran | 1 |
| | | |

| **Topkomponente(n)** | | |
|---|---|---|
| *T₂* | Suppenwürzer | 10 |
| *T₃* | hochkalorische Basis | 300 |

## Patentansprüche

1. Nahrungsmittelkonzentrat zur Herstellung von Nahrungsmittelprodukten, umfassend
- mindestens eine Bindemittel enthaltende erste Geschmackskomponente und
- mindestens eine zweite Geschmackskomponente,
die getrennt voneinander vorliegen, wobei die erste Geschmackskomponente und die zweite Geschmackskomponente ohne Zugabe eines weiteren Bindemittels durch Geben in ein flüssiges Medium zu einem fertigen Nahrungsmittelprodukt verarbeitbar sind.

2. Nahrungsmittelkonzentrat gemäß Anspruch 1, wobei die mindestens eine zweite Geschmackskomponente Bindemittel enthält.

3. Nahrungsmittelkonzentrat gemäß Anspruch 1 oder 2, derart hergerichtet, dass die mindestens eine erste Geschmackskomponente mit einer ersten Einwaage pro Liter flüssiges Medium zuzugeben ist, wobei die erste Einwaage unabhängig von der Anzahl eingesetzter erster Geschmackskomponenten konstant ist.

4. Nahrungsmittelkonzentrat gemäß einem der Ansprüche 1 bis 3, wobei zur Herstellung einer Soße die erste Einwaage pro 1 Liter flüssiges Medium im Bereich von 80 bis 180 Gramm, bevorzugt im Bereich von 100 bis 160 Gramm liegt.

5. Nahrungsmittelkonzentrat gemäß einem der Ansprüche 1 bis 3, wobei zur Herstellung einer Suppe die erste Einwaage pro 1 Liter flüssiges Medium im Bereich von 50 bis 120 g, bevorzugt im Bereich von 65 bis 110 g liegt.

6. Nahrungsmittelkonzentrat gemäß einem der Ansprüche 1 bis 5, wobei die mindestens eine erste Geschmackskomponente einen oder mehrere der folgenden Inhaltsstoffe umfasst: modifizierte Stärke, Milchzucker, Molkereierzeugnisse, Maltodextrin, würzende Bestandteile, Gemüsepulver, Fruchtpulver, Kartoffelerzeugnisse, Salz, Hefeextrakt, Geschmacksverstärker, Milcheiweiß, Pflanzeneiweiß, Zucker, Aroma, Säuerungsmittel, Säureregulatoren, Emulgatoren, pflanzliche Fette, tierische Fette, pflanzliche Öle, tierische Öle, Verdickungsmittel, Gewürzextrakt, Malzessigextrakt, färbende Lebensmittel, Farbstoffe und/oder färbende Pflanzenextrakte.

7. Nahrungsmittelkonzentrat gemäß Anspruch 6, wobei die mindestens eine erste Geschmackskomponente des weiteren einen oder mehrere der folgenden Inhaltsstoffe umfasst: Geliermittel und/oder Stabilisator.

8. Nahrungsmittelkonzentrat gemäß einem der Ansprüche 1 bis 7, derart hergerichtet, dass die mindestens eine zweite Geschmackskomponente mit einer zweiten Einwaage pro Liter flüssiges Medium zuzugeben ist, wobei die zweite Einwaage unabhängig von der Anzahl eingesetzter zweiter Geschmackskomponenten konstant ist.

9. Nahrungsmittelkonzentrat gemäß einem der Ansprüche 1 bis 8, wobei die mindestens eine zweite Geschmackskomponente *(T₁ᵢ)* zur Herstellung einer Soße oder Suppe mit einer zweiten Einwaage pro 1 Liter flüssiges Medium im Bereich von 8 bis 12 g, bevorzugt 10 g einzusetzen ist, wobei *T₁ᵢ* vorzugsweise einen oder mehrere der folgenden Inhaltsstoffe umfasst: Kräuter, Gewürze, Fruchtpulver, Gemüsepulver, Zucker, Hefeextrakt, Würze, Geschmacksverstärker, Aroma, Salz, Maltodextrin, Würzmittel, Milchzucker, Eigelbpulver, Gewürzextrakte, Säuerungsmittel, färbende Pflanzenextrakte, Verdickungsmittel.

10. Nahrungsmittelkonzentrat gemäß einem der Ansprüche 1 bis 8, wobei die mindestens eine zweite Geschmackskomponente *(T₂)*, der Suppenwürzer, zur Herstellung einer Suppe mit einer Einwaage pro 1 Liter flüssiges Medium im Bereich von 8 bis 12 g, bevorzugt 10 g einzusetzen ist, wobei T₂ vorzugsweise einen oder mehrere der folgenden Inhaltsstoffe umfasst: Salz, Maltodextrin, Hefeextrakt, Würze, Geschmacksverstärker, Aroma.

11. Nahrungsmittelkonzentrat gemäß einem der Ansprüche 1 bis 8, wobei die mindestens eine zweite Geschmackskomponente *(T₃)*, die hochkalorische Basis, zur Herstellung einer Suppe mit einer Einwaage pro 1 Liter flüssiges Medium im Bereich von 100 bis 500 g, bevorzugt im Bereich von 250 bis 350 g einzusetzen ist, wobei T₃ vorzugsweise einen oder mehrere der folgenden Inhaltsstoffe umfasst: Fruchtzucker, Zucker, Milchzucker, Mehl, Maltodextrin, modifizierte Stärke, native Stärke, lösliche und/oder unlösliche Ballaststoffe, pflanzliche Fette, tierische Fette, pflanzliche Öle, tierische Öle, Molkereierzeugnisse, Vitamine und Mineralstoffe, Aroma, färbende Lebensmittel, Farbstoffe, färbende Pflanzenextrakte.

12. Nahrungsmittelkonzentrat gemäß einem der Ansprüche 1 bis 8, wobei die mindestens eine zweite Geschmackskomponente *(T₄)*, die energie- und ballaststoffanreichernde Basis, zur Herstellung einer Suppe mit einer Einwaage pro 1 Liter flüssiges Medium im Bereich von 50 bis 400 g , bevorzugt im Bereich von 80 bis 120g einzusetzen ist, wobei T₄ vorzugsweise einen oder mehrere der folgenden Inhaltsstoffe aufweist: Maltodextrin, Zucker, Milchzucker, Mehl, modifizierte oder native Stärke, Pflanzenfett, tierische Fettem pflanzliche Öle, Molkereierzeugnisse, lösliche und unlösliche Ballaststoffe, Vitamine und Mineralstoffe, Verdickungsmittel, Aroma, färbende Lebensmittel, Farbstoffe, färbende Pflanzenextrakte.

13. Verfahren zur Herstellung eines Nahrungsmittelproduktes, **dadurch gekennzeichnet, dass** mindestens eine Bindemittel enthaltende erste Geschmackskomponente und mindestens eine, gegebenenfalls Bindemittel enthaltende, zweite Geschmackskomponente, die getrennt voneinander vorliegen, ohne Zugabe eines weiteren Bindemittels in ein flüssiges Medium gegeben werden und zu dem fertigen Nahrungsmittelprodukt verarbeitet werden.

14. Verfahren gemäß Anspruch 13, **dadurch gekennzeichnet, dass** mehrere Bindemittel enthaltende erste Geschmackskomponenten, die getrennt voneinander vorliegen, in das flüssige Medium gegeben werden.

15. Verfahren gemäß Anspruch 13 oder 14, **dadurch gekennzeichnet, dass** eine erste Einwaage vorgegeben wird, diese erste Einwaage auf die Einwaagen mehrerer Bindemittel enthaltender und räumlich getrennt voneinander vorliegender erster Geschmackskomponenten aufgeteilt wird, eine zweite Einwaage vorgegeben wird, diese zweite Einwaage auf die Einwaagen mindestens einer zweiten Geschmackskomponente aufgeteilt wird, diese ersten zweiten Geschmackskomponenten ohne Zugabe eines weiteren Bindemittels in ein flüssiges Medium gegeben werden und zu einem fertigen Nahrungsmittel, insbesondere einer Suppe und/oder Soße verarbeitet werden.
